# EUROPÄISCHE PATENTSCHRIFT

(11) **EP 3 532 285 B1**
(45) Veröffentlichungstag und Bekanntmachung des Hinweises auf die Patenterteilung: **16.09.2020**
(21) Anmeldenummer: 17783400.9
(22) Anmeldetag: 21.09.2017
(51) Int. Cl.: B32B 17/10

(54) **VERFAHREN ZUM HERSTELLEN EINER VERBUNDSCHEIBE FÜR EIN KRAFTFAHRZEUG**
PROCESS FOR PRODUCING A LAMINATED PANE FOR A VEHICLE
PROCÉDÉ DE FABRICATION D'UNE VITRE COMPOSITE POUR UN VÉHICULE AUTOMOBILE

(30) Priorität: 28.10.2016 EP 16196251
(43) Veröffentlichungstag der Anmeldung: 04.09.2019
(73) Patentinhaber: SAINT-GOBAIN GLASS FRANCE, 92400 Courbevoie (FR)
(72) Erfinder: GILLESSEN, Stephan, 52477 Alsdorf (DE); BAUERLE, Pascal, 80700 Roye (FR); BRIS, Jean Jacques, 71620 Bey (FR)
(74) Vertreter: Gebauer, Dieter Edmund
(86) Internationale Anmeldenummer: PCT/EP2017/073927
(87) Internationale Veröffentlichungsnummer: WO 2018/077547

(56) Entgegenhaltungen:
- WO-A1-2007/057454
- WO-A1-2007/077239
- WO-A1-2007/085599
- WO-A1-2008/015242
- WO-A1-2008/083915
- WO-A1-2009/024278
- WO-A2-2007/077466
- WO-A2-2014/055388

## Beschreibung

Die Erfindung betrifft ein Verfahren zum Herstellen einer Verbundscheibe für ein Kraftfahrzeug.

Herkömmlicherweise werden elektronische Komponenten zwischen jeweiligen Scheiben einer Verbundglasscheibe angeordnet, um je nach Einsatzzweck unterschiedliche Aufgaben zu erfüllen. Die CH 698260 B1 offenbart beispielsweise ein Einbauelement mit einer mittels leitfähigem Oxid oder Metall, transluzent beschichteten, flexiblen Polymerfolie wie z.B. PET, sowie mit durch elektrisch leitende Klebpunkte verbundene elektronische Bauteile, wobei die elektrisch leitenden Klebpunkte zwischen der leitfähigen Beschichtung und der Bauteile durch elektrisch nicht leitende Verstärkungsklebpunkte gegen Druck-, Zug- oder Scherkräfte geschützt sind.

Ferner offenbart die EP 2100722 A2 einen Lichtsensor, welcher in einer Windschutzscheibe einlaminiert ist, also zwischen der Außenscheibe und der Innenscheibe der Windschutzscheibe angeordnet ist, welche mittels einer thermoplastischen Zwischenschicht miteinander verbunden sind. So kann die Windschutzscheibe mit dem integrierten Lichtsensor kompakt bereitgestellt werden, eine nachträgliche Montage des Lichtsensors entfällt. Der Lichtsensor ist in Form von Flip-Chip-Fotodioden auf einer Leiterplatte ausgebildet.Ein Nachteil der vorstehend genannten Lösungen besteht jedoch darin, dass die jeweiligen Elektronikkomponenten derart benachbart zu der thermoplastischen Zwischenschicht angeordnet sind, dass diese an der Zwischenschicht anliegen und die Zwischenschicht somit eine Dicke der jeweiligen Elektronikkomponenten kompensiert. Deshalb ist es erforderlich, möglichst dünn ausgebildete Elektronikkomponenten zu verwenden, um zu gewährleisten, dass die Zwischenschicht die Dicke der Elektronikkomponenten ausgleichen kann. Bei Verwendung dickerer Elektronikkomponenten kann es daher in nachteilhafter Weise zu einem Glasbruch kommen, wenn die Zwischenschicht nicht in der Lage ist, die Dicke der Elektronikkomponenten auszugleichen und es somit zu Spannungen in den Scheiben kommt.

Das Einbetten von Leuchtdioden in eine weiche thermoplastische Zwischenschicht während des Kalandrierens einer Verbundscheibe durch ein Walzenpaar ist aus der WO 2007/057454 A1 bekannt. Nachteilig bei dieser Vorgehensweise ist die Möglichkeit einer Schädigung der Leuchtdioden, insbesondere von empfindlichen elektrischen Anschlüssen der Leuchtdioden, beim Kalandrieren durch mechanische Kräfte, insbesondere Scherkräfte. Zudem ist die Temperatur beim Kalandrieren auf das Einbetten der Leuchtdioden abzustimmen, welche gegebenenfalls von einer optimalen Temperatur für den Kalandriervorgang abweicht.

Der Erfindung liegt somit die Aufgabe zugrunde, ein verbessertes Verfahren zum Herstellen der Verbundscheibe anzugeben, welche die Verwendung dickerer Elektronikkomponenten ermöglicht, ohne dabei in der Verbundscheibe Spannungen zu erzeugen. Zudem soll die Verbundscheibe mit einem möglichst geringen Ausschuß kostengünstig herstellbar sein.

Die Aufgabe der vorliegenden Erfindung wird erfindungsgemäß durch ein Verfahren zum Herstellen einer Verbundscheibe für ein Kraftfahrzeug nach dem unabhängigen Anspruch gelöst.

Die vorliegende Erfindung zeigt ein Verfahren zum Herstellen einer Verbundscheibe für ein Kraftfahrzeug. Das Verfahren umfasst das Bereitstellen einer ersten Scheibe und einer zweiten Scheibe, das Anordnen einer Kunststofffolie zwischen der ersten Scheibe und der zweiten Scheibe und das Anordnen einer Leuchtdiode an einer Oberfläche der Kunststofffolie.

Das Verfahren umfasst des Weiteren das Erwärmen der Kunststofffolie zumindest im Bereich der Leuchtdiode in einen fließfähigen Zustand und ein Einsetzen der Leuchtdiode in die in den fließfähigen Zustand erwärmte Kunststofffolie unter Verdrängung eines vorgegebenen Volumens der Kunststofffolie. Dies erfolgt mittels einer an einer Außenoberfläche der ersten Scheibe oder der zweiten Scheibe anliegenden oder von der Außenoberfläche der ersten Scheibe oder der zweiten Scheibe beabstandet angeordneten Wärmequelle. Die Kunststofffolie wird durch die Wärmequelle ausschließlich in einem Abschnitt bzw. Teil der Kunststofffolie lokal erwärmt. Es erfolgt somit keine Erwärmung der gesamten Kunststofffolie, wie dies beim Laminieren, insbesondere Kalandrieren, der Verbundscheibe erfolgt.

Nach dem Einsetzen der Leuchtdiode in die Kunststofffolie erfolgt ein Laminieren der ersten Scheibe und der zweiten Scheibe mit zwischengelegter Kunststofffolie. Der Ausdruck "Laminieren" bezieht sich im Sinne der Erfindung auf die Verbindung der beiden Scheiben durch die zwischengelegte Kunststofffolie, wobei die Kunststofffolie nicht lokal sondern im Gesamten erwärmt wird. Das Einsetzen der Leuchtdiode erfolgt demnach bevor die erste Scheibe und die zweite Scheibe mittels einer thermoplastischen Zwischenschicht zu einem Verbund verbunden ("laminiert") werden.

Erfindungsgemäß wird die Kunststofffolie im Bereich der Leuchtdiode lokal in den fließfähigen Zustand erwärmt. Die Leuchtdiode kann daraufhin unter Verdrängung eines vorgegebenen Volumens in die Kunststofffolie eindringen und eine Ausnehmung in der Kunststofffolie schaffen. Aufgrund des Verdrängens des vorgegebenen Volumens der Kunststofffolie im erwärmten Zustand der Kunststofffolie wird in vorteilhafter Weise ermöglicht, dass im Gegensatz zu einem Einpressen der Leuchtdiode in die Kunststofffolie in kaltem Zustand eine Gesamtdicke der Leuchtdiode und der Kunststofffolie eine zuverlässige Dicke nicht überschreitet und somit das Erzeugen von Spannungen in den Scheiben vermieden wird. Ein verdrängtes Volumen der Kunststofffolie kann so in vorteilhafter Weise in andere Richtungen abfließen und eine Dicke der Kunststofffolie mit eingesetzter Leuchtdiode entspricht im Wesentlichen einer Dicke der Kunststofffolie ohne eingesetzte Leuchtdiode. Somit kann des Weiteren erreicht werden, dass dickere Leuchtdioden, die im Gegensatz zu sehr dünnen Leuchtdioden in der Herstellung deutlich kostengünstiger sind, eingesetzt werden können. Da das Einsetzen der Leuchtdiode in die Kunststofffolie vor dem Laminieren der Verbundscheibe erfolgt, ist die Leuchtdiode mechanisch gut geschützt. Eine Beschädigung der Leuchtdiode, insbesondere von empfindlichen elektrischen Anschlüssen, kann zuverlässig und sicher vermieden werden. Zudem kann die Leuchtdiode mit hoher Präzision positioniert werden. Die Nachteile des im Stand der Technik bekannten Einbettens von Leuchtdioden während des Laminierens können vermieden werden. Aufgrund der lediglich lokalen Einbringung von Wärme in die Kunststofffolie wird in vorteilhafter Weise vermieden, dass es bereits vor einer Entgasung der Verbundscheibe zu einem Verkleben und damit verbundenen Lufteinschlüssen der Kunststofffolie mit den Scheiben der Verbundscheibe kommt. Insbesondere wird das Erwärmen der Kunststofffolie zumindest im Bereich der Leuchtdiode in den fließfähigen Zustand vor einem Entlüften der Verbundscheibe durchgeführt.

Gemäß einer Ausführungsform ist vorgesehen, dass die Wärmequelle die Kunststofffolie zumindest im Bereich der Leuchtdiode in den fließfähigen Zustand unter Abgabe von Strahlungswärme und/oder Konvektionswärme erwärmt. Es können somit eine Vielzahl unterschiedlicher Wärmequellen zur Einbringung der Wärme in die Kunststofffolie verwendet werden.

Gemäß einer weiteren Ausführungsform ist vorgesehen, dass die Wärmequelle durch eine Heizfolie ausgebildet ist, welche auf die Außenoberfläche der ersten Scheibe oder der zweiten Scheibe aufgeklebt wird. Das Vorsehen der Heizfolie stellt in vorteilhafter Weise eine kostengünstige Lösung dar und ermöglicht einen gleichmäßigen Eintrag von Wärme im Bereich einer definierbaren Fläche.

Gemäß einer weiteren Ausführungsform ist vorgesehen, dass die Heizfolie ausschließlich auf einen Teil bzw. Abschnitt der Außenoberfläche der ersten Scheibe oder der zweiten Scheibe aufgeklebt wird.

Gemäß einer weiteren Ausführungsform ist vorgesehen, dass die Kunststofffolie auf eine Temperatur von 50 bis 150°C, vorzugsweise von 80 bis 150°C, erwärmt wird, wobei die Kunststofffolie nach Abkühlen unterhalb einer Temperatur von 50°C ihre Form beibehält. Vorstehend genannter Temperaturbereich entspricht in vorteilhafter Weise für die meisten Kunststofffolie einer Glasübergangstemperatur, in welcher der Kunststoff in einen gummiartigen bis zähflüssigen Zustand übergeht und somit fließfähig ist.

Gemäß einer weiteren Ausführungsform ist vorgesehen, dass die Leuchtdiode in die in den fließfähigen Zustand erwärmte Kunststofffolie unter Anwendung einer im Wesentlichen senkrecht zur Kunststofffolie gerichteten Kraft eingesetzt wird. Somit ist die Leuchtdiode positionsgenau in die Kunststofffolie einsetzbar.

Gemäß einer weiteren Ausführungsform ist vorgesehen, dass das vorgegebene Volumen der Kunststofffolie bei dem Einsetzen der Leuchtdiode in die in den fließfähigen Zustand erwärmte Kunststofffolie im Wesentlichen in Längsrichtung der Kunststofffolie verdrängt wird. Damit wird die Dicke der Kunststofffolie auch bei Einsetzen einer relativ dicken Leuchtdiode in vorteilhafter Weise nicht vergrößert.

Gemäß einer weiteren Ausführungsform ist vorgesehen, dass bei dem Einsetzen der Leuchtdiode in die in den fließfähigen Zustand erwärmte Kunststofffolie bis zu 100 %, bevorzugt bis zu 95 %, besonders bevorzugt bis zu 90 % des Volumens der Kunststofffolie in Dickenrichtung der Kunststofffolie durch die Leuchtdiode verdrängt wird. Somit wird die Leuchtdiode in vorteilhafter Weise in die Kunststofffolie eingesetzt, wobei nur eine minimale Dicke von im Wesentlichen 0 %, 5 % oder 10 % der Kunststofffolie verbleibt.

Gemäß einer weiteren Ausführungsform ist vorgesehen, dass die Kunststofffolie Polyvinylbutyral, Ethylenvinylacetat, Polyacrylat, Polymethylmethacrylat oder Polyurethan enthält oder aus einem oder mehreren dieser Materialien besteht. Somit kann je nach Anforderung ein geeignetes Material der Kunststofffolie für einen entsprechenden Einsatzzweck gewählt werden.

Gemäß einer weiteren Ausführungsform ist vorgesehen, dass die Leuchtdiode auf einer, insbesondere eine Folie umfassenden, Leiterplatte angeordnet ist. Somit kann die Stromversorgung der Leuchtdiode sichergestellt und eine gewünschte Positionierung je nach baulichen Anforderungen im Bereich der Verbundscheibe ermöglicht werden.

Gemäß einer weiteren Ausführungsform ist vorgesehen, dass die Leuchtdiode eine Dicke von bis zu 1 mm, vorzugsweise von bis zu 0,7 mm, aufweist. Leuchtdioden dieser Dicke sind deutlich kostengünstiger als dünnere Leuchtdioden herstellbar und tragen somit zu einer Kostensenkung der mit der bzw. den Leuchtdioden bestückten Verbundscheibe bei.

Gemäß einer weiteren Ausführungsform ist vorgesehen, dass eine Lichtemissionsseite der Leuchtdiode zu der ersten Scheibe oder zu der zweiten Scheibe hin ausgerichtet ist. Somit ist die Leuchtdiode beispielsweise zu einem Fahrgastraum hin oder zu einer Außenseite des Kraftfahrzeugs hin ausrichtbar. Hierdurch ergibt sich je nach Ausrichtung der Leuchtdiode ein anderer Einsatzzweck.

Die beschriebenen Ausgestaltungen und Weiterbildungen lassen sich beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Es zeigen:

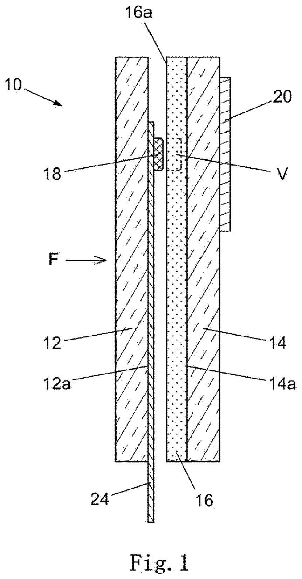

- Fig. 1: eine Seitenansicht einer Verbundscheibe für ein Kraftfahrzeug vor einem Einsetzen einer Leuchtdiode in eine Kunststofffolie gemäß einer bevorzugten Ausführungsform der Erfindung;
- Fig. 2: eine Seitenansicht einer Verbundscheibe für ein Kraftfahrzeug nach einem Einsetzen einer Leuchtdiode in eine Kunststofffolie gemäß einer bevorzugten Ausführungsform der Erfindung; und
- Fig. 3: ein Ablaufdiagramm eines Verfahrens zum Herstellen der Verbundscheibe für das Kraftfahrzeug gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

Die Verbundscheibe 10 für das Kraftfahrzeug weist eine erste Scheibe 12 und eine zweite Scheibe 14 auf. Zwischen der ersten Scheibe 12 und der zweiten Scheibe 14 ist eine Kunststofffolie 16 angeordnet. Ferner ist eine Leuchtdiode 18 an einer Oberfläche 16a der Kunststofffolie 16 angeordnet.

Des Weiteren ist eine Wärmequelle 20 vorgesehen, welche zumindest im Bereich der Leuchtdiode 18 an einer Außenoberfläche der zweiten Scheibe 14 anliegt bzw. angeordnet ist. Alternativ kann die Wärmequelle 20 von der Außenoberfläche 14a der zweiten Scheibe beabstandet angeordnet sein. Alternativ kann die Wärmequelle 20 beispielsweise an einer Außenoberfläche 12a der ersten Scheibe 12 angeordnet oder von der Außenoberfläche 12a der ersten Scheibe 12 beabstandet angeordnet sein.

Die Wärmequelle 20 ist in der vorliegenden Ausführungsform durch eine Heizfolie ausgebildet. Die Heizfolie ist auf die Außenoberfläche 14a der zweiten Scheibe 14 aufgeklebt. Alternativ kann eine andere geeignete Wärmequelle vorgesehen sein, welche beispielsweise dazu ausgebildet ist, Strahlungswärme und/oder Konvektionswärme abzugeben.

Die Heizfolie erwärmt die Kunststofffolie 16 lokal zumindest im Bereich der Leuchtdiode 18 in einen fließfähigen Zustand. In diesem fließfähigen Zustand der Kunststofffolie 16 ist die Leuchtdiode 18 in die erwärmte Kunststofffolie 16 unter Verdrängung eines vorgegebenen Volumens V der Kunststofffolie 16 in die Kunststofffolie 16 einsetzbar bzw. eindrückbar. Die Leuchtdiode 18 wird in die in den fließfähigen Zustand erwärmte Kunststofffolie 16 vorzugsweise unter Anwendung einer im Wesentlichen senkrecht zur Kunststofffolie 16 gerichteten Kraft F eingesetzt. Alternativ kann die Kraft auch eine andere Richtung aufweisen. Die Kunststofffolie wird auf eine Temperatur von 50 bis 150°C, vorzugsweise von 80 bis 150°C, erwärmt. Vorzugsweise behält die Kunststofffolie nach Abkühlen unterhalb einer Temperatur von 50°C ihre Form bei.

Das vorgegebene Volumen V der Kunststofffolie 16 wird bei dem Einsetzen der Leuchtdiode 18 in die in den fließfähigen Zustand erwärmte Kunststofffolie 16 im Wesentlichen in Längsrichtung der Kunststofffolie 16 verdrängt. Somit wird in vorteilhafter Weise eine Dicke der Kunststofffolie 16 beibehalten. Beim Einsetzen der Leuchtdiode 18 in die in den fließfähigen Zustand erwärmte Kunststofffolie 16 wird bis zu 90 % des Volumens V der Kunststofffolie 16 in Dickenrichtung der Kunststofffolie 16 durch die Leuchtdiode 18 verdrängt.

Die Kunststofffolie 16 ist vorzugsweise aus Polyvinylbutyral ausgebildet. Alternativ kann die Kunststofffolie 16 beispielsweise aus Ethylenvinylacetat, Polyacrylat, Polymethylmethacrylat oder Polyurethan ausgebildet sein. Die Leuchtdiode 18 ist auf einer, insbesondere eine weitere Folie umfassenden Leiterplatte angeordnet. Alternativ kann die Leuchtdiode 18 beispielsweise durch ein dünnes elektrisches Kabel mit einer Energiequelle verbunden sein. Die Anzahl der verwendeten Leuchtdioden ist frei wählbar.

Das Erwärmen der Kunststofffolie 16 zumindest im Bereich der Leuchtdiode 18 in den fließfähigen Zustand wird vor dem Entlüften der Verbundscheibe 10 durchgeführt. Eine Dicke der Leuchtdiode 18 beträgt bis zu 1 mm, vorzugsweise bis zu 0,7 mm. Eine Lichtemissionsseite der Leuchtdiode 18 ist vorzugsweise zur zweiten Scheibe 14 hin ausgerichtet. Alternativ kann die Lichtemissionsseite der Leuchtdiode 18 beispielsweise zur ersten Scheibe 12 hin ausgerichtet sein.

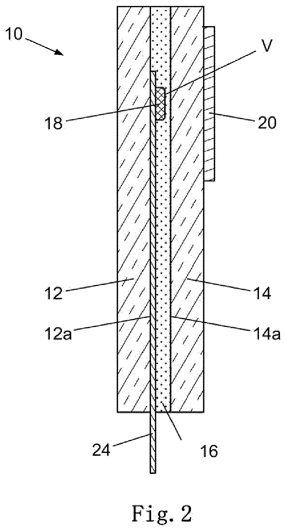

Fig. 2 zeigt eine Seitenansicht einer Verbundscheibe für ein Kraftfahrzeug nach einem Einsetzen einer Leuchtdiode in eine Kunststofffolie gemäß einer bevorzugten Ausführungsform der Erfindung.

Im vorliegend gezeigten Zustand wurde die Kunststofffolie bereits durch die Heizfolie in den fließfähigen Zustand erwärmt und die Leuchtdiode 18 in die in den fließfähigen Zustand erwärmte Kunststofffolie 16 unter Verdrängung des vorgegebenen Volumens V der Kunststofffolie 16 eingesetzt.

Ein Abstand zwischen der ersten Scheibe 12 und der zweiten Scheibe 14 der Verbundscheibe ist wie in Fig. 2 dargestellt somit nur minimal größer als eine Dicke der Leuchtdiode 18. Dies resultiert daher, da die in den fließfähigen Zustand erwärmte Kunststofffolie 16 bei dem Einsetzen der Leuchtdiode 18 im Bereich der Leuchtdiode 18 verdrängt wird.

Insbesondere wird bis zu 90 % des Volumens V der Kunststofffolie 16 in Dickenrichtung der Kunststofffolie 16 durch die Leuchtdiode 18 verdrängt. Somit verbleiben lediglich 10 % des Volumens V der Kunststofffolie 16 in Dickenrichtung der Kunststofffolie 16 benachbart zur Leuchtdiode 18 in Dickenrichtung der Kunststofffolie 16.

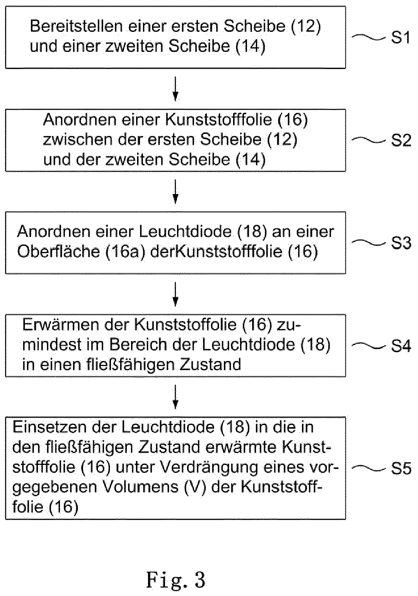

Fig. 3 zeigt ein Ablaufdiagramm eines Verfahrens zum Herstellen der Verbundscheibe für das Kraftfahrzeug gemäß der bevorzugten Ausführungsform der Erfindung.

Das Verfahren umfasst gemäß Schritt S1 das Bereitstellen einer ersten Scheibe und einer zweiten Scheibe, gemäß Schritt S2 das Anordnen einer Kunststofffolie zwischen der ersten Scheibe und der zweiten Scheibe und gemäß Schritt S3 das Anordnen einer Leuchtdiode an einer Oberfläche der Kunststofffolie.

Das Verfahren umfasst des Weiteren gemäß Schritt S4 das Erwärmen der Kunststofffolie zumindest im Bereich der Leuchtdiode in einen fließfähigen Zustand und gemäß Schritt S5 das Einsetzen der Leuchtdiode in die in den fließfähigen Zustand erwärmte Kunststofffolie unter Verdrängung eines vorgegebenen Volumens der Kunststofffolie, sowie das anschließende Laminieren der ersten Scheibe und der zweiten Scheibe mit zwischengelegter Kunststofffolie.

Die Verbundscheibe 10 der vorliegenden Erfindung ist nicht nur im Bereich von Kraftfahrzeugen, sondern ebenfalls im Bereich von Gebäuden im Rahmen einer Gebäudeverglasung einsetzbar.

### Bezugszeichenliste

- 10: Verbundscheibe
- 12: erste Scheibe
- 12a: Außenoberfläche der ersten Scheibe
- 14: zweite Scheibe
- 14a: Außenoberfläche der zweiten Scheibe
- 16: Kunststofffolie
- 16a: Oberfläche der Kunststofffolie
- 18: Leuchtdiode
- 20: Wärmequelle
- 22: Ausnehmung
- 24: Leiterplatte
- F: Kraft
- V: Volumen

## Patentansprüche

1. Verfahren zum Herstellen einer Verbundscheibe (10) für ein Kraftfahrzeug,
mit den Schritten:
Bereitstellen einer ersten Scheibe (12) und einer zweiten Scheibe (14);
Anordnen einer Kunststofffolie (16) zwischen der ersten Scheibe (12) und der zweiten Scheibe (14);
Anordnen einer Leuchtdiode (18) an einer Oberfläche (16a) der Kunststofffolie (16);
Lokales Erwärmen der Kunststofffolie (16) zumindest im Bereich der Leuchtdiode (18) in einen fließfähigen Zustand mittels einer an einer Außenoberfläche (12a; 14a) der ersten Scheibe (12) oder der zweiten Scheibe (14) anliegenden oder von der Außenoberfläche (12a; 14a) der ersten Scheibe (12) oder der zweiten Scheibe (14) beabstandet angeordneten Wärmequelle (20); Einsetzen der Leuchtdiode (18) in die in den fließfähigen Zustand erwärmte Kunststofffolie (16) unter Verdrängung eines vorgegebenen Volumens (V) der Kunststofffolie (16);
Nach Einsetzen der Leuchtdiode in die Kunststofffolie, Laminieren der ersten Scheibe (12) und der zweiten Scheibe (14) mit zwischengelegter Kunststofffolie (16).

2. Verfahren nach Anspruch 1, **dadurch gekennzeichnet, dass** die Wärmequelle (20) die Kunststofffolie (16) zumindest im Bereich der Leuchtdiode (18) unter Abgabe von Strahlungswärme und/oder Konvektionswärme erwärmt.

3. Verfahren nach Anspruch 1 oder 2, **dadurch gekennzeichnet, dass** die Wärmequelle (20) durch eine Heizfolie ausgebildet ist, welche auf die Außenoberfläche (12a; 14a) der ersten Scheibe (12) oder der zweiten Scheibe (14) aufgeklebt wird.

4. Verfahren nach Anspruch 3, **dadurch gekennzeichnet, dass** die Heizfolie ausschließlich auf einen Teil der Außenoberfläche (12a; 14a) der ersten Scheibe (12) oder der zweiten Scheibe (14) aufgeklebt wird.

5. Verfahren nach einem der vorhergehenden Ansprüche 1 bis 4, **dadurch gekennzeichnet, dass** die Kunststofffolie auf eine Temperatur von 50 bis 150°C, vorzugsweise von 80 bis 150°C erwärmt wird, wobei die Kunststofffolie (16) nach Abkühlen unterhalb einer Temperatur von 50°C ihre F orm beibehält.

6. Verfahren nach einem der vorhergehenden Ansprüche 1 bis 5, **dadurch gekennzeichnet, dass** die Leuchtdiode (18) in die in den fließfähigen Zustand erwärmte Kunststofffolie (16) unter Anwendung einer im Wesentlichen senkrecht zur Kunststofffolie (16) gerichteten Kraft (F) eingesetzt wird.

7. Verfahren nach einem der vorhergehenden Ansprüche 1 bis 6, **dadurch gekennzeichnet, dass** das vorgegebene Volumen (V) der Kunststofffolie (16) bei dem Einsetzen der Leuchtdiode (18) in die in den fließfähigen Zustand erwärmte Kunststofffolie (16) im Wesentlichen in Längsrichtung der Kunststofffolie (16) verdrängt wird.

8. Verfahren nach einem der vorhergehenden Ansprüche 1 bis 6, **dadurch gekennzeichnet, dass** bei dem Einsetzen der Leuchtdiode (18) in die in den fließfähigen Zustand erwärmte Kunststofffolie (16) bis zu 95% des Volumens (V) der Kunststofffolie (16) in Dickenrichtung der Kunststofffolie (16) durch die Leuchtdiode (18) verdrängt wird.

## Claims

1. Method for producing a composite pane (10) for a motor vehicle,
with the steps:
providing a first pane (12) and a second pane (14);
arranging a plastic film (16) between the first pane (12) and the second pane (14);
arranging an LED (18) on a surface (16a) of the plastic film (16);
local heating of the plastic film (16) at least in the region of the LED (18) into a fluid state by means of a heating source (20) positioned on an outer surface (12a; 14a) of the first pane (12) or the second pane (14) or arranged at a distance from the outer surface (12a; 14a) of the first pane (12) or the second pane (14);
introducing the LED (18) into the plastic film (16) heated into the fluid state with displacement of a predefined volume (V) of the plastic film (16);
after introducing the LED into the plastic film, laminating the first pane (12) and the second pane (14) with the interposed plastic film (16).

2. Method according to claim 1, **characterized in that** the heating source (20) heats the plastic film (16) at least in the region of the LED (18) with emission of radiant heat and/or convection heat.

3. Method according to claim 1 or 2, **characterized in that** the heating source (20) is implemented by a heating foil that is glued on the outer surface (12a; 14a) of the first pane (12) or the second pane (14).

4. Method according to claim 3, **characterized in that** the heating foil is glued exclusively onto a part of the outer surface (12a; 14a) of the first pane (12) or of the second pane (14).

5. Method according to one of the preceding claims 1 through 4, **characterized in that** the plastic film is heated to a temperature of 50 to 150 °C, preferably of 80 to 150 °C, wherein the plastic film (16) retains its shape after cooling below a temperature of 50 °C.

6. Method according to one of the preceding claims 1 through 5, **characterized in that** the LED (18) is introduced into the plastic film (16) heated into the fluid state while applying a force (F) directed substantially perpendicular to the plastic film (16).

7. Method according to one of the preceding claims 1 through 6, **characterized in that** the predefined volume (V) of the plastic film (16) is displaced substantially in the longitudinal direction of the plastic film (16) upon introduction of the LED (18) into the plastic film (16) heated into the fluid state.

8. Method according to one of the preceding claims 1 through 6, **characterized in that** upon introduction of the LED (18) into the plastic film (16) heated into the fluid state, up to 95% of the volume (V) of the plastic film (16) in the direction of the thickness of the plastic film (16) is displaced by the LED (18).

## Revendications

1. Procédé de fabrication d'un vitrage composite (10) pour un véhicule automobile, avec les étapes :
fournir une première vitre (12) et une deuxième vitre (14);
disposer un film plastique (16) entre la première vitre (12) et la deuxième vitre (14);
disposer une LED (18) sur une surface (16a) du film plastique (16);
chauffage local du film plastique (16) au moins dans la zone de la LED (18) à l'état fluide au moyen d'une source de chauffage (20) placée sur une surface extérieure (12a; 14a) de la première vitre (12) ou de la deuxième vitre (14) ou disposée à distance de la surface extérieure (12a; 14a) de la première vitre (12) ou de la deuxième vitre (14) ;
l'introduction de la LED (18) dans le film plastique (16) chauffé à l'état fluide avec déplacement d'un volume prédéfini (V) du film plastique (16) ;
après avoir introduit la LED dans le film plastique, laminer la première vitre (12) et la deuxième vitre (14) avec le film plastique (16) interposé.

2. Procédé selon la revendication 1, **caractérisé en ce que** la source de chauffage (20) chauffe le film plastique (16) au moins dans la zone de la LED (18) avec émission de chaleur rayonnante et/ou de chaleur de convection.

3. Procédé selon la revendication 1 ou 2, **caractérisé en ce que** la source de chauffage (20) est mise en oeuvre par une feuille chauffante qui est collée sur la surface extérieure (12a; 14a) de la première vitre (12) ou de la deuxième vitre (14).

4. Procédé selon la revendication 3, **caractérisé en ce que** la feuille chauffante est collée exclusivement sur une partie de la surface extérieure (12a; 14a) de la première vitre (12) ou de la deuxième vitre (14).

5. Procédé selon l'une des revendications précédentes 1 à 4, **caractérisé en ce que** la feuille de plastique est chauffée à une température de 50 à 150 °C, de préférence de 80 à 150 °C, la feuille de plastique (16) conservant sa forme après avoir été refroidie en dessous d'une température de 50 °C.

6. Procédé selon l'une des revendications précédentes 1 à 5, **caractérisé en ce que** la LED (18) est introduite dans le film plastique (16) chauffé à l'état fluide tout en appliquant une force (F) dirigée sensiblement perpendiculairement au film plastique (16).

7. Procédé selon l'une des revendications précédentes 1 à 6, **caractérisé en ce que** le volume prédéfini (V) du film plastique (16) est déplacé sensiblement dans la direction longitudinale du film plastique (16) lors de l'introduction de la LED (18) dans le film plastique (16) chauffé à l'état fluide.

8. Procédé selon l'une des revendications précédentes 1 à 6, **caractérisé en ce que**, lors de l'introduction de la LED (18) dans le film plastique (16) chauffé à l'état fluide, jusqu'à 95% du volume (V) du film plastique (16) dans le sens de l'épaisseur du film plastique (16) est déplacé par la LED (18)
